# EUROPEAN PATENT SPECIFICATION

(11) **EP 2 350 454 B1**
(45) Date of publication and mention of the grant of the patent: **09.01.2019**
(21) Application number: 09755898.5
(22) Date of filing: 18.11.2009
(51) Int. Cl.: F03D 13/20

(54) **METHOD OF MANUFACTURING A WIND TURBINE TOWER STRUCTURE**
VERFAHREN ZUR HERSTELLUNG EINER WINDTURBINENTURMSTRUKTUR
PROCÉDÉ DE FABRICATION D'UNE STRUCTURE DE TOURS ÉOLIENNES

(30) Priority: 25.11.2008 DK 200801660; 25.11.2008 US 117604 P
(43) Date of publication of application: 03.08.2011
(73) Proprietor: Vestas Wind Systems A/S, 8200 Aarhus N (DK)
(72) Inventor: KRISTENSEN, Jonas, 6900 Skjern (DK)
(74) Representative: Vestas Patents Department
(86) International application number: PCT/EP2009/065348
(87) International publication number: WO 2010/060833

(56) References cited:
- WO-A1-01/73292
- WO-A1-03/100178
- DE-A1-102006 013 638
- JP-A- 2003 293 938

## Description

### Technical field

The present invention relates to a method of manufacturing a tower structure for a wind turbine, and to a wind turbine tower structure production facility.

### Background of the invention

Traditionally, when building wind turbines, steel tower sections are produced in a factory, and each complete tower section is transported to the site where the wind turbine is to be deployed. A plurality of tower sections can then be assembled on top of each other to form a wind turbine tower.

An increasing demand for wind turbines with higher capacity, for land-based as well as offshore deployment sites, results in a need for wind turbine towers having a higher structural strength than the towers currently in use.

For tubular wind turbine towers, such a higher structural strength may be achieved by increasing the wall thickness and/or the diameter of the tower. This makes it difficult to transport the tower sections, especially for the tubular base sections of the wind turbine tower, as the tower sections tend to become too heavy, due to increased wall thickness, or to have a diameter exceeding the physical limit imposed by the infrastructure, e.g. the clearance beneath a bridge or in a tunnel.
The transport problem is addressed e.g. in WO 02/38952 A2 disclosing welding tower rings to each other at the tower site.

Furthermore, in order to overcome the transport problem, US 2006/0272244 discloses a method where the wider sections of a windmill can be split along vertical lines, whereby the resulting shell segments can be laid down lengthwise with a load height suitable for transportation. Consequently, US 2006/0272244 discloses a solution to the transportation problem which appears highly suitable, in particular in the case of one or a few wind turbines being deployed at a site.

However, it would be desirable to have a more rational way of providing the towers, especially when a larger number of wind turbines is to be deployed.

### Summary of the invention

In view of the above, an object of the invention is to solve or at least reduce at least one of the problems discussed above. In particular, an object is to provide a more rational way of providing the towers when a larger number of wind turbines is to be deployed.

According to a first aspect of the invention, there is provided a method of manufacturing a wind turbine tower structure, comprising the steps of: providing a plurality of tubular tower structure sub-sections at a movable wind turbine tower structure production facility; and welding the plurality of tubular sub-sections together to form the wind turbine tower structure.

The term "wind turbine tower structure" should, in the context of the present application be understood to include various tower structures that may be used to support the rotor and blades of a wind turbine, such as, an entire tower, a tubular support structure used to anchor the wind turbine (such a tower structure is often referred to as a "monopile"), or an entire "one-piece" wind turbine tower.

The present invention is based on the realization that deployment of wind turbines with large diameter tubular tower structures can be rationalized by providing a tower structure manufacturing facility at a location that does not necessitate any further road transport to provide the tower structures to the deployment site, which may be an offshore deployment site or a land-based deployment site.

Hereby, a rational production of the towers can be achieved while at the same time at least facilitating road transport of material for the tower structures.

Through the welding together of the tubular sub-sections, the amount of manual labor required can be reduced, which enables cost-efficient manufacturing of the tower structures, as compared to the on-site assembly according to the prior art.

Moreover, the tubular sub-sections which are provided at the movable tower structure production facility may advantageously be transported to the facility standing on a suitable vehicle, such as a trailer for road transport.

By "standing" should here be understood that the base of the tubular sub-section faces the bed of the vehicle when transportation takes place.

For road transportation in general, the size of the goods that can be transported is typically limited by the total height of the loaded vehicle (because of tunnels etc). By transporting the tubular sub-sections standing and selecting the height of the tubular sub-sections depending on the properties of the route from the factory to the movable facility, larger diameter sub-sections can be transported than if the sub-sections had been transported lying down.

Furthermore, when all wind turbine tower structures have been completed for a particular site, the movable production facility can be relocated to another site. The movable production facility thus provides a flexible manufacturing facility that can be located where additional manufacturing capacity is needed. This may be a very advantageous feature, since the location of wind turbines may often be politically motivated and/or subject to changes during the planning stage.

The tubular sub-sections may be cylindrical or tapered.

The step of providing the tubular sub-sections may comprise, for each tubular sub-section, providing a steel plate; rolling the steel plate in a rolling mill to curve the steel plate in such a way that two ends of the steel plate face each other; and welding together the two ends of the steel plate facing each other, thereby forming the tubular sub-section.

By manufacturing the tubular sub-sections at the movable production facility, any road transportation of raw material to the movable production facility can be facilitated. In particular, road transportation of steel sheets requires fewer vehicles and less intricate route planning than road transportation of tubular sub-sections. Moreover, higher tubular sub-sections can be formed, which may further rationalize the production of the base section (and of the other sections of the tower).

Furthermore, the steel sheets may be selected to have a standard width, such as 3 meters, which means that they may be supplied by practically any provider of steel sheets. Hereby, the production of the tower structures can be made independent of the presence of a permanent tower structure factory. This feature of the present embodiment of the invention may greatly improve the availability and efficiency of the wind turbine tower structure production, especially for deployment sites far away from a permanent tower structure factory.

Moreover, the step of welding the plurality of tubular sub-sections may comprise the steps of: arranging a top end of a first tubular sub-section adjacent a base end of a second tubular sub-section; and providing a circumferential welding seam between the first and second tubular sub-sections.

It may also be advantageous to fit any installations in the wind turbine tower structure before it is moved from the movable production facility to the deployment site, thereby reducing the work needed at the deployment site. To facilitate transportation of the finished wind turbine tower structures, the method according to the present invention may further comprise the step of arranging the tower structure on a part of the movable production facility being accessible from outside the facility to enable transportation of the tower structure to its deployment site.

According to a second aspect of the invention, there is provided a movable wind turbine tower structure production facility comprising a first welding station for welding a plurality of tubular sub-sections together to form a tubular wind turbine tower structure.

The first welding station may advantageously comprise a support structure for supporting a first and a second tubular sub-section in such a way that a top end of the first tubular sub-section faces a base end of the second tubular sub-section; and a welding arrangement for providing a circumferential welding seam joining the top end of the first tubular sub-section and the base end of the second tubular sub-section.

Additionally, the movable tower production facility may comprise: a rolling mill; a second set of welding stations; and/or a booth for surface treatment.

The movable tower production facility according to the present invention may be provided as a land-based facility or as a floating facility in view of the particular circumstances for a given installation at a deployment site. For a deployment site for off-shore wind turbines or for land-based wind turbines close to a suitable mooring site, a floating movable wind turbine tower production facility may be preferred, while a land-based movable wind turbine tower structure production facility may be the choice for a deployment site which is far from a suitable mooring site and/or close to a permanent tower structure production facility.

A movable floating wind tower structure production facility, which may advantageously be provided in the form of a barge or a self-propelled vessel, may be especially suitable for handling the entire tower production - from steel plate to finished tower structure - due to the inherent capability of a floating facility to be able to support the typically very heavy rolling mill needed for such a production flow.

On the other hand, a movable land-based wind tower structure production facility, which may advantageously include one or several trailers, may be deployed in an even greater number of locations, regardless of the presence of a suitable mooring site.

According to an embodiment of the above-mentioned movable floating wind turbine tower structure production facility, it may advantageously comprise a workmen's cabin, whereby the location of the facility becomes practically independent of whether or not there are any land-based facilities nearby.

Other objectives, features and advantages will appear from the following detailed disclosure, from the attached dependent claims as well as from the drawings.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 schematically illustrates an exemplary offshore wind turbine site;
Fig. 2 schematically illustrates an embodiment of a movable floating wind turbine tower structure production facility;
Fig. 3 is a flow-chart schematically illustrating an embodiment of the method according to the invention of manufacturing a wind turbine tower structure in the facility of fig 2;
Fig 4 schematically illustrates an embodiment of a movable land-based wind turbine tower structure production facility; and
Fig. 5 is a flow-chart schematically illustrating an embodiment of the method according to the invention of manufacturing a wind turbine tower structure in the facility of fig 4.

### Detailed description of preferred embodiments

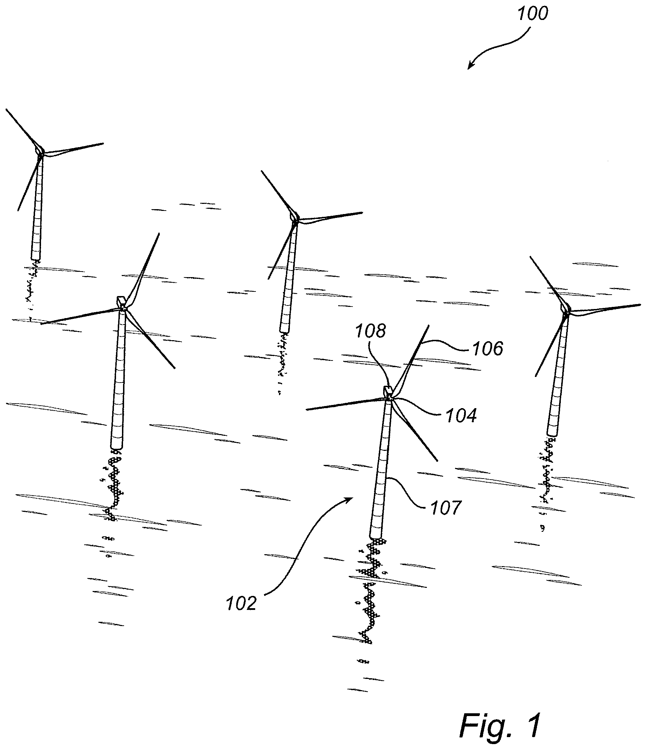

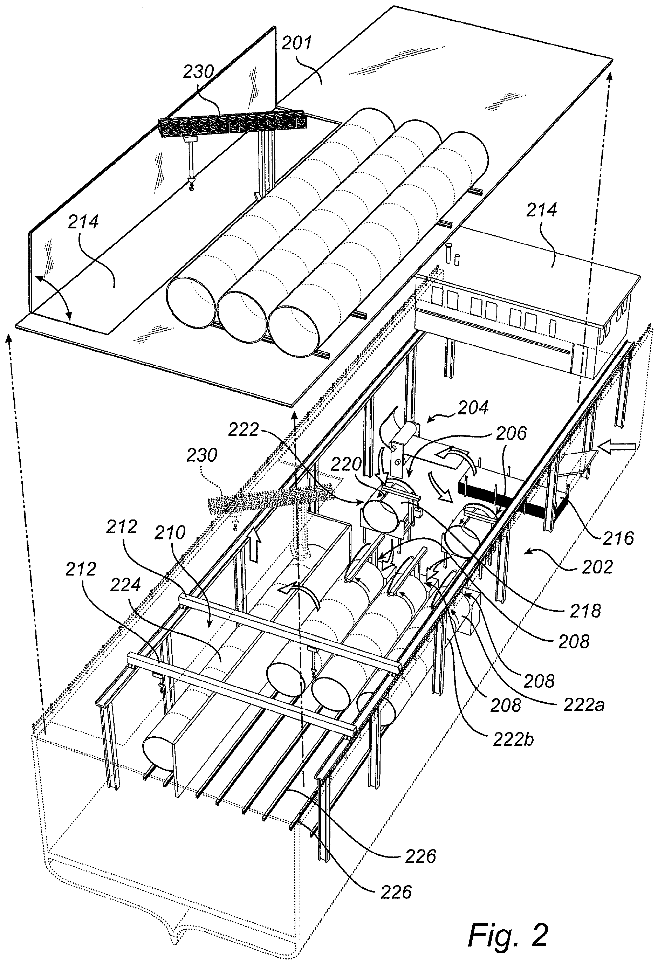

Figure 1 schematically illustrates an offshore wind turbine site 100 comprising a plurality of wind turbines 102. Each wind turbine 102 comprises a rotor 104 provided with a set of blades 106. The rotor is arranged on top of a wind turbine tower 107 on a foundation (not shown) secured to the sea bed. The foundation may, for example, be provided in the form of another tower structure - a so-called "monopile". As the wind blows, the blades 106 makes the rotor 104 rotate. The rotor 104 drives a generator (arranged in a housing 108) thereby generating energy. Figure 2 schematically illustrates a movable floating wind turbine tower structure production facility 200, here being a barge having an open storage deck 201 and a production deck 202 with manufacturing facilities located below the open storage deck 201.

The manufacturing facilities here includes a rolling mill 204, welding stations 206 for forming tubular sub-sections, welding stations 208 for joining a plurality of tubular sub-section to form tubular tower structure (in the presently illustrated case tubular tower sections for being assembled to form the completed tower at the deployment site), and a booth for surface treatment 210. Furthermore, a set of cranes 212 are provided for moving goods between the stations.

Although not explicitly illustrated in fig 2, the production facility 200 may further include provisions for attaching connectors, such as flanges, to the tower sections for enabling final assembly at the deployment site.

Typically, such connectors would be welded to the tower sections in the same welding stations 208 used for joining the tubular sub-sections.

A loading hatch 214 is arranged in the deck 201, to enable moving a finished tower section from the production deck 202 to an area above deck 201. The movable floating production facility may also comprise a workmen's cabin 214.

As a new set of wind turbines are to be deployed at an offshore wind turbine site (or a ground based site) the barge can be towed to a nearby harbor to enable local manufacture of at least the sections of the wind turbine tower not suitable for road transportation.

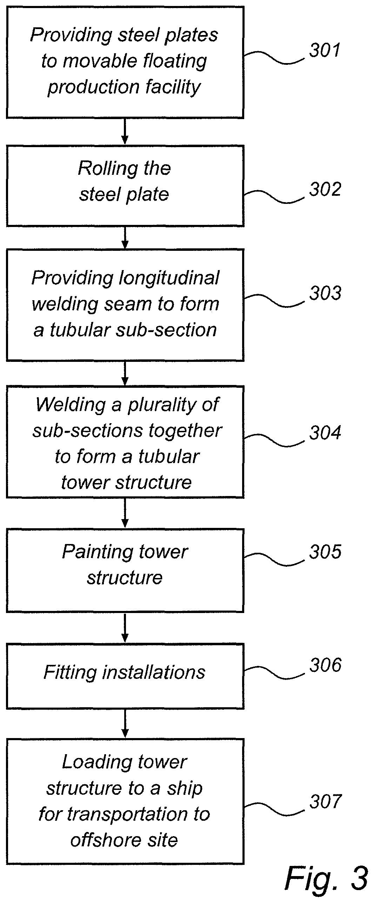

An embodiment of the method according to the invention of manufacturing a wind turbine tower structure will now be described with reference to figure 2 and figure 3.

First, in step 301, steel plates 216 are provided to the movable floating tower production facility 200, e.g. by means of road transportation. The steel plates are then loaded into the production facility located below deck.

In step 302, a steel plate 216 is provided to the rolling mill 204. The rolling mill 204 rolls the steel plate 216 and produces a rolled steel plate 218 having a curvature of substantially 360°.

The rolled steel plate 218 is then moved by one of the cranes 212 to a welding station, where, in step 303, a longitudinal welding seam 220 is provided to form a tubular sub-section.

The tubular sub-section is then moved to another welding station by one of the cranes 212 where, in step 304, a plurality of tubular sub-sections are welded together to form a tubular tower structure 224 as follows.This can be achieved by arranging a first 222a and a second 222b tubular sub-section end-to-end. The support structure 226 is typically configured to allow synchronous rotation of the first and second sub-sections. Thereby a circumferential welding seam can be provided, welding the first 222a and second 222b tubular sub sections together.

Additional tubular sub-sections can then be added (one by one) and welded to the most recently attached tubular sub-section until a complete tower structure is achieved. Here, nine tubular sub-sections form a tower section. However, it is recognized that the number of tubular sub-sections that form a tower structure may vary depending on the type of tower structure and the properties of the wind turbine.

Subsequently, the complete tubular tower structure 224 is moved to the surface treatment booth 210, where, in step 305, it is painted to provide corrosion protection. However, other types of surface treatment are also possible.

The complete tubular tower structure can then be moved to an area on the open storage deck 201 where, in step 306, any required installations can be fitted inside the tower section. This may typically include a ladder section, work platform, light, and cable fixtures. This type of installations are often referred to as "internals".

Finally, in step 307, the tubular tower structure can be loaded to a ship for transportation to the offshore wind turbine site.

If the complete wind turbine tower is assembled on-site from tower sections, the upper sections may be manufactured at a conventional factory since the smaller size and lower weight of such sections may allow for conventional road transportation. However, it is recognized that the upper sections may also be manufactured at the movable floating production facility.

It should also be noted that a complete tower may be manufactured at the movable floating production facility 200 and transported to the deployment site in one piece. This procedure may be especially advantageous for an offshore deployment site.

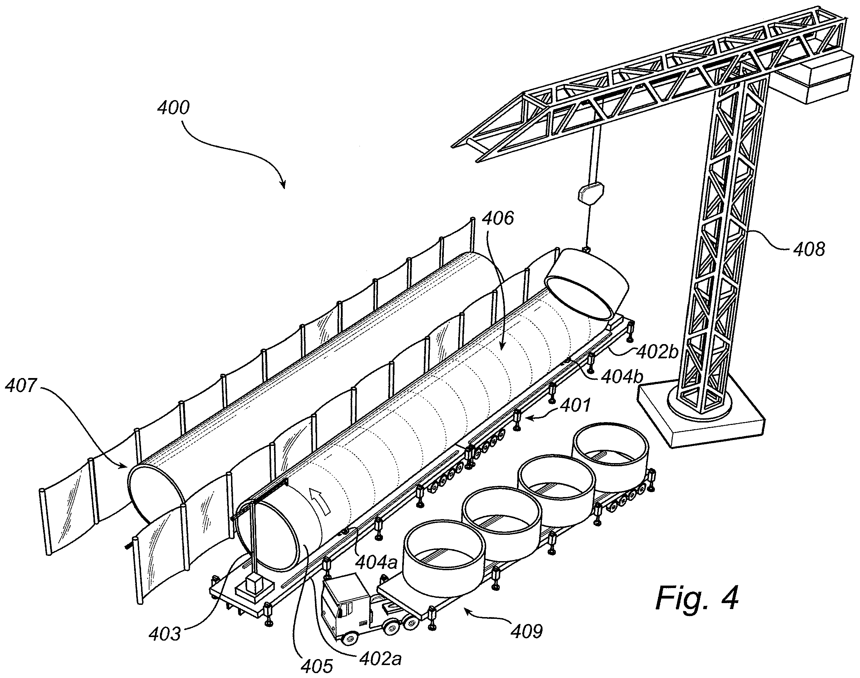

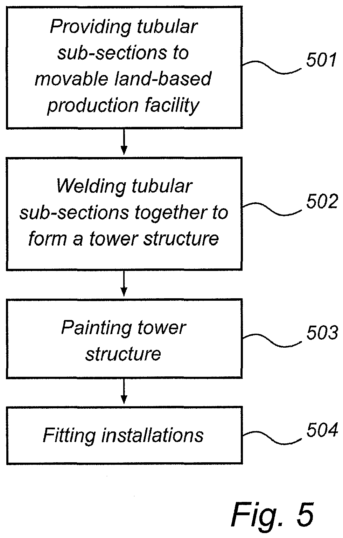

Having now described an exemplary embodiment of a movable floating wind turbine tower structure production facility and a manufacturing method suitable for that facility with reference to figs 2 and 3, an exemplary embodiment of a movable land-based wind turbine tower structure production facility and a manufacturing method suitable therefore will now be described with reference to figs 4 and 5.

Figure 4 schematically illustrates a movable land-based wind turbine tower structure production facility 400 comprising a working platform 401, here formed by two trailers 402a-b which have been transported to a location in the vicinity of a wind turbine deployment site and arranged end-on-end as illustrated in fig 4. As will be appreciated by the person skilled in the art, the working platform 401 may be formed by trailers arranged differently than illustrated in fig 4, and/or using other dedicated material that has been transported to the location.

On the working platform 401, a welding station 403 and support structures 404a-b are provided for joining a plurality of tubular sub-sections 405 (only one of these has here been indicated with a reference numeral) to form a tubular tower structure 406 (in the presently illustrated case tubular tower sections for being assembled to form a complete tower at the deployment site), and a booth 407 for surface treatment. Furthermore, a crane 408 is provided for moving goods from a vehicle 409 used for transporting the tubular sub-sections 404 to the location of production and the working platform 401. The same crane 408, or another crane (not shown in fig 4) may be used to move a tower structure 405 from the working platform 401 to the booth 407 for surface treatment.

Although not explicitly illustrated in fig 4, the production facility 400 may further include provisions for attaching connectors, such as flanges, to the tower sections for enabling final assembly at the deployment site.

Typically such connectors would be welded to the tower sections in the same welding station 403 used for joining the tubular sub-sections 404.

As is schematically illustrated in fig 4, the large-diameter tubular sub-sections 404 have been transported to the production facility location standing on the bed of the trailer 409. Hereby, the height as well as the length of the vehicle may be adapted to the available route(s) between the factory where the tubular sub-sections 404 are manufactured and the deployment site (more precisely the location of the movable production facility 400). The combination of this type of transport and the rational welding enabled by the movable production facility 400, enables more rational tower structure manufacturing for large diameter wind turbine tower structures. That the provision of the movable production facility according to the present embodiment of the invention makes this type of transportation economically feasible is an important and inventive insight by the present inventor.

An embodiment of the method according to the invention of manufacturing a wind turbine tower structure will now be described with reference to figure 4 and figure 5.

First, in step 501, tubular sub-sections 404 are provided to the movable tower production facility 400 standing on a trailer 409. The tubular sub-sections 405 are moved to the working platform 401 by the crane 408.

In step 502, a plurality of tubular sub-sections 405 are welded together to form a tubular tower structure 406. This can be achieved by arranging two tubular sub-section end-to-end and then joining the sub-sections with a circumferential welding seam. To this end, the support structures 404a-b may be configured to allow synchronous rotation of the two sub-sections to be joined.

Additional tubular sub-sections can then be added (one by one) and welded to the most recently attached tubular sub-section until a complete tower structure is achieved. Here, fourteen tubular sub-sections 405 form a tower section 406. However, it is recognized that the number of tubular sub-sections that forms a tower structure may vary depending on the type of tower structure and the properties of the wind turbine.

Subsequently, the complete tubular tower structure 406 is moved to the surface treatment booth 407, where, in step 503, it is painted to provide corrosion protection. However, other types of surface treatment are also possible. Alternatively, the tubular sub-sections 405 may be partly pre-painted and only receive a final "touch-up" at the movable land-based production facility 400.

Finally, in step 504, any required installations can be fitted inside the tower section. This may typically include a ladder section, work platform, light, and cable fixtures. This type of installations are often referred to as "internals".

If the complete wind turbine tower is assembled on-site from tower sections, the upper sections may be manufactured at a conventional factory since the smaller size and lower weight of such sections may allow for conventional road transportation. However, it is recognized that the upper sections may also be manufactured at the movable land-based production facility 400.

The invention has mainly been described above with reference to a few embodiments. However, as is readily appreciated by a person skilled in the art, other embodiments than the ones disclosed above are equally possible within the scope of the invention, as defined by the appended claims.

For example, although being described in the form of a barge in the present detailed description, the movable floating wind turbine tower structure production facility may equally well be a self-propelled vessel. Moreover, the finished tower structures may be moved from the floating production facility to the deployment site, or to a temporary storage facility, which may be located on-shore or off-shore. Various production steps, such as fitting the internal installations inside the tower structures may be performed at such a temporary storage facility. Additionally, the steps described in connection with fig 3 may be performed using a suitable movable land-based production facility, while the steps described in connection with fig 5 may be performed using a suitable movable floating production facility.

## Claims

1. A method of manufacturing a tubular wind turbine tower structure, comprising the steps of:
providing a plurality of tubular tower structure sub-sections at a movable wind turbine tower structure production facilty (200);
wherein said step of providing the plurality of tubular tower structure sub-sections comprises manufacturing the tubular sub-sections at the movable production facility (200); and
welding said plurality of tubular sub-sections (222a, 222b) together to form said tubular wind turbine tower structure.

2. The method according to claim 1, wherein said step of welding the plurality of tubular sub-sections together comprises the steps of:
arranging a top end of a first tubular sub-section adjacent a base end of a second tubular sub-section; and
providing a circumferential welding seam between said first and second tubular sub-sections.

3. The method according to claim 1 or 2, further comprising the step of:
surface treating the tower structure.

4. The method according to any one of the preceding claims, further comprising the step of:
fitting installations in the tower structure.

5. The method according to any one of the preceding claims, wherein said step of providing the tubular sub-sections comprises, for each tubular sub-section:
providing a steel plate;
rolling said steel plate in a rolling mill to curve the steel plate in such a way that two ends of said steel plate face each other; and
welding together the two ends of the steel plate facing each other, thereby forming said tubular sub-section.

6. The method according to any one of the preceding claims, wherein said movable production facility is a movable floating production facility.

7. The method according to any one of the preceding claims, further comprising the step of:
arranging the tubular tower structure on a part of the movable production facility being accessible from outside the facility to enable transportation of the tubular tower structure to its deployment site.

8. A movable wind turbine tower structure production facility (200) comprising:
a first welding station (208)
for welding a plurality of tubular sub-sections together to form a wind turbine tower structure, and
a rolling mill (204) and a second welding station (206) for forming the tubular sub-sections.

9. The movable wind turbine tower structure production facility according to claim 8, wherein said first welding station comprises:
a support structure for supporting a first and a second tubular sub-section in such a way that a top end of said first tubular sub-section faces a base end of said second tubular sub-section; and
a welding arrangement for providing a circumferential welding seam joining said top end of the first tubular sub-section and said base end of the second tubular sub-section.

10. The movable wind turbine tower structure production facility according to claim 8 or 9, wherein:
the rolling mill is for rolling a steel plate to curve the steel plate in such a way that two ends of said steel plate face each other; and
the second welding station is for welding together the two ends of the steel plate facing each other, thereby forming a tubular sub-section.

11. The movable wind turbine tower structure production facility according to any one of claims 8 to 10, further comprising:
a booth for surface treatment of said tower structure.

12. The movable wind turbine tower structure production facility according to any one of claims 8 to 11, further comprising a tower structure moving arrangement for moving a finished tower structure to a location being accessible from an outside of the movable wind turbine tower structure production facility for enabling transportation of the tower structure from the movable wind turbine tower structure production facility to a deployment site.

13. The movable wind turbine tower structure production facility according to any one of claims 8 to 12, being a floating movable wind turbine tower structure production facility.

14. The movable wind turbine tower structure production facility according to claim 13, wherein said moving arrangement comprises a crane for lifting said finished tower structure from a production deck to an open storage deck.

15. The movable wind turbine tower structure production facility according to any one of claims 8 to 12, being a land-based movable wind turbine tower structure production facility.

## Patentansprüche

1. Verfahren zum Herstellen einer röhrenförmigen Windturbinenturmstruktur, umfassend die Schritte von:
Bereitstellen einer Vielzahl von röhrenförmigen Turmstrukturunterabschnitten in einer beweglichen Windturbinenturmstruktur-Produktionsanlage (200);
wobei der Schritt des Bereitstellens der Vielzahl von röhrenförmigen Turmstrukturunterabschnitten ein Herstellen der röhrenförmigen Unterabschnitte in der beweglichen Produktionsanlage (200) umfasst; und
Zusammenschweißen der Vielzahl von röhrenförmigen Unterabschnitten (222a, 222b), um die röhrenförmige Windturbinenturmstruktur zu bilden.

2. Verfahren nach Anspruch 1, wobei der Schritt des Zusammenschweißens der Vielzahl von röhrenförmigen Unterabschnitten die Schritte umfasst von:
Anordnen eines oberen Endes eines ersten röhrenförmigen Unterabschnitts benachbart zu einem Basisende eines zweiten röhrenförmigen Unterabschnitts; und
Bereitstellen einer Umfangsschweißnaht zwischen dem ersten und dem zweiten röhrenförmigen Unterabschnitt.

3. Verfahren nach Anspruch 1 oder 2, weiter umfassend den Schritt von:
Oberflächenbehandeln der Turmstruktur.

4. Verfahren nach einem der vorstehenden Ansprüche, weiter umfassend den Schritt von:
Einbauen von Installationen in der Turmstruktur.

5. Verfahren nach einem der vorstehenden Ansprüche, wobei der Schritt des Bereitstellens der röhrenförmigen Unterabschnitte für jeden röhrenförmigen Unterabschnitt umfasst:
Bereitstellen einer Stahlplatte;
Walzen der Stahlplatte in einem Walzwerk, um die Stahlplatte derart zu krümmen, dass zwei Enden der Stahlplatte einander zugewandt sind; und
Zusammenschweißen der zwei Enden der Stahlplatte, die einander zugewandt sind, wodurch der röhrenförmige Unterabschnitt gebildet wird.

6. Verfahren nach einem der vorstehenden Ansprüche, wobei die bewegliche Produktionsanlage eine bewegliche schwimmende Produktionsanlage ist.

7. Verfahren nach einem der vorstehenden Ansprüche, weiter umfassend den Schritt von:
Anordnen der röhrenförmigen Turmstruktur an einem Teil der beweglichen Produktionsanlage, der von außerhalb der Anlage zugänglich ist, um den Transport der röhrenförmigen Turmstruktur zu ihrer Einsatzstelle zu ermöglichen.

8. Bewegliche Windturbinenturmstruktur-Produktionsanlage (200), umfassend:
eine erste Schweißstation (208) zum Zusammenschweißen einer Vielzahl von röhrenförmigen Unterabschnitten, um eine Windturbinenturmstruktur zu bilden, und
ein Walzwerk (204) und eine zweite Schweißstation (206) zum Bilden der röhrenförmigen Unterabschnitte.

9. Bewegliche Windturbinenturmstruktur-Produktionsanlage nach Anspruch 8, wobei die erste Schweißstation umfasst:
eine Trägerstruktur zum Tragen eines ersten und eines zweiten röhrenförmigen Unterabschnitts derart, dass ein oberes Ende des ersten röhrenförmigen Unterabschnitts einem Basisende des zweiten röhrenförmigen Unterabschnitts zugewandt ist; und
eine Schweißanordnung zum Bereitstellen einer Umfangsschweißnaht, die das obere Ende des ersten röhrenförmigen Unterabschnitts und das Basisende des zweiten röhrenförmigen Unterabschnitts verbindet.

10. Bewegliche Windturbinenturmstruktur-Produktionsanlage nach Anspruch 8 oder 9, wobei:
das Walzwerk zum Walzen einer Stahlplatte vorgesehen ist, um die Stahlplatte derart zu krümmen, dass zwei Enden der Stahlplatte einander zugewandt sind; und
die zweite Schweißstation zum Zusammenschweißen der zwei Enden der Stahlplatte, die einander zugewandt sind, vorgesehen ist, wodurch der röhrenförmige Unterabschnitt gebildet wird.

11. Bewegliche Windturbinenturmstruktur-Produktionsanlage nach einem der Ansprüche 8 bis 10, weiter umfassend:
eine Kabine zur Oberflächenbehandlung der Turmstruktur.

12. Bewegliche Windturbinenturmstruktur-Produktionsanlage nach einem der Ansprüche 8 bis 11, weiter umfassend eine Turmstrukturbewegungsanordnung zum Bewegen einer fertigen Turmstruktur zu einem Ort, der von außerhalb der beweglichen Windturbinenturmstruktur-Produktionsanlage zugänglich ist, um den Transport der Turmstruktur von der beweglichen Windturbinenturmstruktur-Produktionsanlage zu einer Einsatzstelle zu ermöglichen.

13. Bewegliche Windturbinenturmstruktur-Produktionsanlage nach einem der Ansprüche 8 bis 12, die eine schwimmende bewegliche Windturbinenturmstruktur-Produktionsanlage ist.

14. Bewegliche Windturbinenturmstruktur-Produktionsanlage nach Anspruch 13, wobei die Bewegungsanordnung einen Kran zum Heben der fertigen Turmstruktur von einem Produktionsdeck zu einem offenen Lagerdeck umfasst.

15. Bewegliche Windturbinenturmstruktur-Produktionsanlage nach einem der Ansprüche 8 bis 12, die eine landgestützte Windturbinenturmstruktur-Produktionsanlage ist.

## Revendications

1. Procédé de fabrication d'une structure de tours éoliennes tubulaires, comprenant les étapes de :
fourniture d'une pluralité de sous-sections de structure de tours tubulaires au niveau d'une unité mobile de production de structures de tours éoliennes (200) ;
dans lequel ladite étape de fourniture de la pluralité de sous-sections de structure de tours tubulaires comprend la fabrication des sous-sections tubulaires au niveau de l'unité mobile de production (200) ; et
soudage de ladite pluralité de sous-sections tubulaires (222a, 222b) ensemble pour former ladite structure de tours éoliennes tubulaires.

2. Procédé selon la revendication 1, dans lequel ladite étape de soudage de la pluralité de sous-sections tubulaires ensemble comprend les étapes de :
agencement d'une extrémité supérieure d'une première sous-section tubulaire adjacente à une extrémité de base d'une seconde sous-section tubulaire ; et
fourniture d'un joint de soudure circonférentiel entre lesdites première et seconde sous-sections tubulaires.

3. Procédé selon la revendication 1 ou 2, comprenant en outre l'étape de :
traitement de surface de la structure de tours.

4. Procédé selon l'une quelconque des revendications précédentes, comprenant en outre l'étape de :
mise en place d'installations dans la structure de tours.

5. Procédé selon l'une quelconque des revendications précédentes, dans lequel ladite étape de fourniture des sous-sections tubulaires comprend, pour chaque sous-section tubulaire :
la fourniture d'une plaque d'acier ;
le laminage de ladite plaque d'acier dans un laminoir pour incurver la plaque d'acier de manière à ce que deux extrémités de ladite plaque d'acier soient en face l'une de l'autre ; et
le soudage ensemble des deux extrémités de la plaque d'acier étant en face l'une de l'autre, pour ainsi former ladite sous-section tubulaire.

6. Procédé selon l'une quelconque des revendications précédentes, dans lequel ladite unité mobile de production est une unité flottante mobile de production.

7. Procédé selon l'une quelconque des revendications précédentes, comprenant en outre l'étape de :
agencement de la structure de tours tubulaires sur une partie de l'unité mobile de production étant accessible de l'extérieur de l'unité pour permettre le transport de la structure de tours tubulaires jusqu'à son site de déploiement.

8. Unité mobile de production de structures de tours éoliennes (200) comprenant :
une première station de soudage (208) pour souder une pluralité de sous-sections tubulaires ensemble pour former une structure de tours éoliennes, et
un laminoir (204) et une seconde station de soudage (206) pour former les sous-sections tubulaires.

9. Unité mobile de production de structures de tours éoliennes selon la revendication 8, dans laquelle ladite première station de soudage comprend :
une structure de support pour supporter une première et une seconde sous-section tubulaire de manière à ce qu'une extrémité supérieure de ladite première sous-section tubulaire soit face à une extrémité de base de ladite seconde sous-section tubulaire ; et
un agencement de soudage pour la fourniture d'un joint de soudure circonférentiel joignant ladite extrémité supérieure de la première sous-section tubulaire et ladite extrémité de base de la seconde sous-section tubulaire.

10. Unité mobile de production de structures de tours éoliennes selon la revendication 8 ou 9, dans laquelle :
le laminoir est destiné au laminage d'une plaque d'acier pour incurver la plaque d'acier de manière à ce que deux extrémités de ladite plaque d'acier soient en face l'une de l'autre ; et
la seconde station de soudage est destinée au soudage ensemble des deux extrémités de la plaque d'acier étant en face l'une de l'autre, pour ainsi former une sous-section tubulaire.

11. Unité mobile de production de structures de tours éoliennes selon l'une quelconque des revendications 8 à 10, comprenant en outre :
une cabine pour le traitement de surface de ladite structure de tours.

12. Unité mobile de production de structures de tours éoliennes selon l'une quelconque des revendications 8 à 11, comprenant en outre un agencement mobile de structure de tours pour déplacer une structure finie de tours à un endroit étant accessible à partir d'un extérieur de l'unité mobile de production de structures de tours éoliennes pour permettre le transport de la structure de tours de l'unité mobile de production de structures de tours éoliennes à un site de déploiement.

13. Unité mobile de production de structures de tours éoliennes selon l'une quelconque des revendications 8 à 12, étant une unité mobile flottante de production de structures de tours éoliennes.

14. Unité mobile de production de structures de tours éoliennes selon la revendication 13, dans laquelle ledit agencement mobile comprend une grue pour lever ladite structure finie de tours d'une plateforme de production à une plateforme de stockage ouverte.

15. Unité mobile de production de structures de tours éoliennes selon l'une quelconque des revendications 8 à 12, étant une unité mobile terrestre de production de structures de tours éoliennes.
